# EUROPEAN PATENT SPECIFICATION

(11) **EP 0 338 696 B1**
(45) Date of publication and mention of the grant of the patent: **11.08.1993**
(21) Application number: 89303350.6
(22) Date of filing: 05.04.1989
(51) Int. Cl.: G01S 13/74, G08B 13/24, H01F 1/153

(54) **Frequency-dividing amorphous wire transponder for use in a presence detection system**
Frequenzteilendes Antwortgerät mit einem amorphen Draht zur Anwendung in einem System zur Anwesenheitsbestimmung
Transpondeur à fil amorphe et à division de fréquence pour l'utilisation dans un système de détection de la présence

(30) Priority: 18.04.1988 US 182998
(43) Date of publication of application: 25.10.1989
(73) Proprietor: Security Tag Systems, Inc., St. Petersburg Florida 33702 (US)
(72) Inventor: Dey, Subrata, St. Petersburg Florida 33703 (US)
(74) Representative: Wilson, Nicholas Martin

(56) References cited:
- EP-A- 0 121 649
- EP-A- 0 123 557
- EP-A- 0 216 584
- GB-A- 2 167 627
- US-A- 3 754 226
- US-A- 4 757 315
- IEEE TRANSACTIONS ON MAGNETICS, vol. MAG-20, no. 5, part 2, September 1984, pages 1373-1375, IEEE, New York, US; M.R.J. GIBBS et al.: "D.C. magnetic properties of metallic glasses after flash annealing"

## Description

### BACKGROUND OF THE INVENTION

The present invention generally pertains to frequency-dividing transponders and is particularly directed to an improved frequency-dividing transponder for use in a presence detection system.

EP-A-0 216 584 describes frequency-dividing transponders and the use thereof in a presence detection system. The transponders described therein include amorphous magnetostrictive, ferromagnetic ribbons that have a frequency-dividing characteristic. EP-A-0 216 584 describes a method of providing a ribbon with frequency-dividing characteristics, according to which, amorphous ferromagnetic material, such as Fe₆₇Co₁₈B₁₄Si₁, Fe₈₁B_{13.5}Si_{3.5}C₂ and Fe₄₀Ni₃₈Mo₄B₁₈ is cut into a long narrow strip so that demagnetizing effects are small; annealed for several minutes in a transverse magnetic field; and then allowed to cool with the magnetic field still applied.

Certain useful articles, which desirably could be made susceptible for detection in a presence detection system utilizing frequency division as a detection technique, are of such configuration and size that they are not as well suited for the attachment of a frequency-dividing ribbon thereto as for the enclosure of a small wire therein. However, heretofore, wires exhibiting frequency-dividing characteristics have been unknown.

### SUMMARY OF THE INVENTION

The present invention which is defined by claim 1 relates to a wire exhibiting frequency-dividing characteristics. More specifically, the present invention provides a transponder for detecting electromagnetic radiation at a first predetermined frequency and responding to said detection by transmitting electromagnetic radiation at a lesser second frequency that is a frequency-divided quotient of the first predetermined frequency, characterized by an amorphous, magnetostrictive, ferromagnetic wire having a circular cross-section and magnetic anisotropy in a preferred direction that is transverse to the length of the wire such that when the wire is excited by electromagnetic radiation at a first predetermined frequency while in the presence of a DC magnetic bias field, magnetic reversal takes place in a rotational mode and the wire transmits electromagnetic radiation at a lesser second predetermined frequency that is a frequency-divided quotient of the first predetermined frequency.

The present invention further provides a presence detection system, including means for transmitting an electromagnetic radiation signal of a first predetermined frequency into a surveillance zone; a transponder for attachement to or enclosure in an article to be detected within the surveillance zone, the transponder being adapted for detecting electromagnetic radiation at the first predetermined frequency and responding to said detection by transmitting electromagnetic radiation at a lesser second frequency that is a frequency-divided quotient of the first predetermined frequency; and means for detecting electromagnetic radiation at the second frequency within the surveillance zone, characterized by the transponder comprising an amorphous, magnetostrictive, ferromagnetic wire having a circular cross-section and magnetic anisotropy in a preferred direction that is transverse to the length of the wire such that when the wire is excited by electromagnetic radiation at a first predetermined frequency while in the presence of a DC magnetic bias field, magnetic reversal takes place in a rotational mode and the wire transmits electromagnetic radiation at a lesser second predetermined frequency that is a frequency-divided quotient of the first frequency.

The present invention also provides a useful article that can be verified as to its authenticity by reason of exhibiting a predetermined frequency-dividing characteristic when excited by a first predetermined frequency, the useful article including a transponder for detecting electromagnetic radiation at a first predetermined frequency and responding to said detection by transmitting electromagnetic radiation at a lesser second frequency that is a frequency-divided quotient of the first predetermined frequency, characterized by the transponder comprising an amorphous, magnetostrictive, ferromagnetic wire having a circular cross-section and magnetic anisotropy in a preferred direction that is transverse to the length of the wire such that when the wire is excited by electromagnetic radiation at a first predetermined frequency while in the presence of a DC magnetic bias field, magnetic reversal takes place in a rotational mode and the wire transmits electromagnetic radiation at a lesser second predetermined frequency that is a frequency-divided quotient of the first predetermined frequency.

The present invention further provides a system for verifying the authenticity of a useful article that exhibits a predetermined frequency-dividing characteristic when excited by a first predetermined frequency, including a useful article containing a transponder for detecting electromagnetic radiation at a first predetermined frequency and responding to said detection by transmitting electromagnetic radiation at a lesser second frequency that is a frequency-divided quotient of the first predetermined frequency; means for transmitting an electromagnetic radiation signal of the first predetermined frequency into a surveillance zone; and means for detecting electromagnetic radiation at the second frequency within the surveillance zone, characterized by the transponder comprising an amorphous, magnetostrictive, ferromagnetic wire having a circular cross-section and magnetic anisotropy in a preferred direction that is transverse to the length of the wire such that when the wire is excited by electromagnetic radiation at a first predetermined frequency while in the presence of a DC magnetic bias field, magnetic reversal takes place in a rotational mode and the wire transmits electromagnetic radiation at a lesser second predetermined frequency that is a frequency-divided quotient of the first frequency.

Additional features of the present invention are described in relation to the description of the preferred embodiments.

### BRIEF DESCRIPTION OF THE DRAWING

Figure 1 illustrates a method of producing a wire with freqency-dividing characteristics in accordance with the present invention.

Figure 2A illustrates the magnetic domain configuration of an as-cast amorphous alloy wire of Iron, Boron and Silicon.

Figure 2B illustrates the preferred direction of the magnetic anisotrophy induced in the as-cast wire of Figure 2A, by a flashing annealing process.

Figure 3 illustrates a presence detection and article verification system according to the present invention.

Figure 4 illustrates a useful article according to the present invention that can be verified as to its authenticity.

### DESCRIPTION OF THE PREFERRED EMBODIMENT

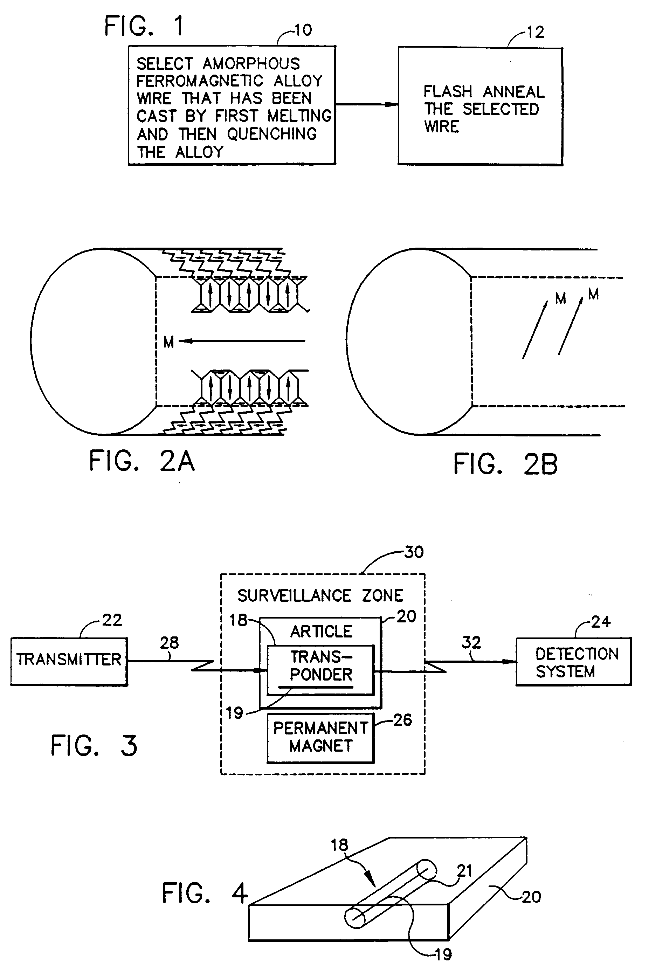

A method of producing a wire with frequency-dividing characteristics in accordance with the present invention is described with reference to Figure 1. The method includes the steps 10 of selecting an amorphous, ferromagnetic alloy wire that has been cast by first melting and then quenching the alloy; and then 12 flash annealing the selected wire.

Wires having frequency-dividing characteristics have been produced by flash annealing selected alloy wires consisting of Iron, Boron and Silicon and consisting of Iron, Boron, Silicon and Carbon. The selected wires were obtained from Allied-Signal Corporation of Morris Township, New Jersey, United States of America. The wire consisting of the alloy of Iron, Boron and Silicon is designated by Allied-Signal Corporation as "AF-1".

The alloy wire is cast by the following melt and quenching procedure. The alloy is melted under a flowing argon atmosphere in an induction furnace. The molten alloy is ejected from a ruby nozzle at the end of a quartz tube into cooling water which is rotating at a high speed. The ejected alloy melt is quenched and rapidly solidified by the water in the form of a continuous wire. The solidified wire is then collected by centrifugal force on the inside of a rotating drum.

These as-cast amorphous alloy wires include sharper pulses and have less voltage-pulse jitter than amorphous alloy ribbons. Also, the magnetization reversal process of amorphous alloy wires is different from the magnetization reversal process of amorphous alloy ribbons. The as-cast amorphous alloy wire exhibits a sharp pulse output accompanying a large Barkhausen jump inversion of the magnetic flux. During the casting process, the outside shell of the wire solidifies first, thereby establishing an outer diameter based on the size of the inside portion of the wire that is still liquid. When the inside portion of the wire subsequently solidifies, it shrinks and thereby creates a longitudinal stress. However, as-cast amorphous alloy ribbon does not exhibit this special characteristic.

Figure 2A illustrates what is believed to be the magnetic domain configuration of an as-cast amorphous alloy ribbon of Iron, Boron and Silicon.

In accordance with the method of the present invention, the as-cast amorphous alloy wire is treated to produce a wire having frequency-dividing characteristics by a flash-annealing process, wherein a current is passed through the as-cast wire for a very short time. As a result of the flash-annealing process, stresses in the wire are relieved and the magnetic anisotropy is induced in a preferred direction transverse to the length of the wire, as illustrated schematically in Figure 2B. Because of this induced anisotropy and the highly magnetostrictive nature of the wire, the magnetomechanical coupling coefficient becomes very high. When this treated amorphous alloy wire is placed in an AC exciting field, magnetic reversal takes place in the rotational mode. The further application of a DC magnetic bias field along the length of the treated alloy wire causes the wire to behave as a nonlinear inductor. When the DC bias field and the AC exciting field are adjusted properly, the treated alloy wire acts as a parametric amplifier and in special cases exhibits frequency-dividing characteristics.

Frequency-dividing characteristics have been exhibited in treated amorphous alloy wires of Iron, Boron and Silicon and of Iron, Boron, Silicon and Carbon having a circular cross-section and a diameter varying in a range of from approximately 50 micrometers to 130 micrometers, and having a length in a range varying from approximately 3 centimeters to 7 centimeters, when in the presence of a DC magnetic bias field and an AC excitation field varying in a frequency range of from approximately 20 kHz to 132 kHz.

This frequency-dividing wire has the following advantageous features: a) a high signal-to-noise ratio; b) quick response, with a cut-off frequency of more than several kHz; c) robustness or high stability against temperature variations; d) small size; e) high reliability and little aging for long-time usage; and f) elasticity.

In a presence detection system according to the present invention, as shown in Figure 3, a transponder 18 including a frequency-dividing wire 19 produced as described above is included in a useful article 20. The transponder 18 may be attached to the article 20, or contained in the the article 20, with the latter embodiment being shown in Figure 4. In either embodiment, the wire 19 must be disposed in such a manner as to be able to mechanically vibrate when excited by an electromagnetic field at the characteristic first predetermined frequency of the wire 19.

Referring to Figure 4, the transponder 18 includes a tube 21, which encloses the frequency-dividing wire 19 in the article 20 in such a manner as to enable the wire 19 to mechanically vibrate when excited by electromagnetic radiation at the characteristic first predetermined frequency of the wire 19.

The system further includes a transmitter 22, a detector 24 and a permanent magnet 26. The transmitter transmits an electromagnetic radiation signal 28 of a first predetermined frequency into a surveillance zone 30. The transponder 18 is contained by an article 20 to be detected within the surveillance zone 30. Alternatively, the transponder 18 is contained in a tag (not shown) that is attached to the article 20 that is to be detected within the surveillance zone 30. The permanent magnet 26 provides an external magnetic bias field within the surveillance zone 30 that is equivalent in strength to 0.7 to 1.0 Oersteds. The wire 19 in the transponder 18 is excited by the electromagnetic radiation at the first predetermined frequency and transmits electromagnetic radiation at a lesser second predetermined frequency that is a frequency-divided quotient of the first predetermined frequency. The detector 24 detects electromagnetic radiation 32 at the second frequency in the surveillance zone 30, and thereby detects the presence of the transponder 20 in the surveillance zone 30.

In one preferred embodiment of a useful article 20 that can be verified as to its authenticity by reason of exhibiting a predetermined frequency-dividing characteristic when excited by a first predetermined frequency, as shown in Figure 4, the article 20 contains a transponder 18. The transponder 18 includes an amorphous, magnetostrictive, ferromagnetic wire 19, which, when excited by an electromagnetic field of a first predetermined frequency while in the presence of a DC magnetic bias field, transmits electromagnetic radiation at a lesser second predetermined frequency that is a frequency-divided quotient of the first predetermined frequency. The transponder 18 further includes a very thin plastic tube 21, which encloses the wire 19 within the article 20 in such a manner as to enable the wire 19 to mechanically vibrate when excited by said electromagnetic field at the first predetermined frequency.

Such a useful article 20 can be verified as to its authenticity, in contrast to a counterfeit article, by using the presence detection system described above with reference to Figure 3.

## Claims

1. A transponder (18) for detecting electromagnetic radiation (28) at a first predetermined frequency and responding to said detection by transmitting electromagnetic radiation (32) at a lesser second frequency that is a frequency-divided quotient of the first predetermined frequency, characterised by an amorphous, magnetostrictive, ferromagnetic wire (19) having a circular cross-section and magnetic anisotropy in a preferred direction that is transverse to the length of the wire such that when the wire is excited by electromagnetic radiation (28) at a first predetermined frequency while in the presence of a DC magnetic bias field, magnetic reversal takes place in a rotational mode and the wire transmits electromagnetic radiation (32) at a lesser second predetermined frequency that is a frequency-divided quotient of the first predetermined frequency.

2. A transponder according to Claim 1, further comprising means (21) for enclosing the wire (19) in an article (20) in such a manner so as to enable the wire to mechanically vibrate when excited by said electromagnetic radiation (28) at the first predetermined frequency.

3. A transponder according to Claim 1, wherein the wire (19) is an alloy consisting of Iron, Boron and Silicon.

4. A transponder according to Claim 1, wherein the wire is an alloy consisting of Iron, Boron, Silicon and Carbon.

5. A presence detection system comprising a transponder (18) according to any one of Claims 1 to 4 for attachment to or enclosure in an article (20) to be detected within a surveillance zone (30), means (22) for transmitting an electromagnetic radiation signal (28) of the first predetermined frequency into the surveillance zone (30); and means (24) for detecting electromagnetic radiation (32) at the second frequency within the surveillance zone (30).

6. A system according to Claim 5, further comprising means (26) for providing a DC magnetic bias field within the surveillance zone (30) to subject the wire (19) to said bias field when within said surveillance zone.

7. A useful article (20) including a transponder (19) according to any one of Claims 1 to 4 whereby the useful article can be verified as to its authenticity by reason of exhibiting a predetermined frequency-dividing characteristic when excited by the first predetermined frequency.

8. A system for verifying the authenticity of a useful article according to Claim 7 comprising means (22) for transmitting an electromagnetic radiation signal (28) of the first predetermined frequency into a surveillance zone (30); and means (24) for detecting electromagnetic radiation (32) at the second frequency within the surveillance zone (30)

9. A method of treating amorphous, ferromagnetic alloy wire to provide the wire (19) with a frequency-dividing characteristic to provide a transponder (18) in accordance with any one of Claims 1 - 4, characterised by comprising the steps of
(a) selecting (10) an amorphous, ferromagnetic alloy wire that has been cast by first melting and then quenching the alloy; and
(b) flash annealing (12) the selected wire.

10. A method of manufacturing an amorphous, ferromagnetic alloy wire (19) having a frequency-dividing characteristic to provide a transponder (18) in accordance with any one of Claims 1 - 4, characterised by comprising the steps of
(a) providing an amorphous, ferromagnetic alloy wire by first melting and then quenching the alloy; and
(b) flash annealing (12) the provided wire.

## Patentansprüche

1. Ein Transponder (18), der elektromagnetische Strahlung (28) auf einer ersten vorbestimmten Frequenz detektiert und auf diese Detektion mit der Transmission elektromagnetischer Strahlung (32) auf einer zweiten kleineren Frequenz, die ein frequenzgeteilter Quotient der ersten vorbestimmten Frequenz ist, reagiert, **gekennzeichnet durch** einen amorphen, magnetostriktiven, ferromagnetischen Draht (19), der einen kreisförmigen Querschnitt und eine magnetische Anisotropie in einer Vorzugsrichtung aufweist, die quer zur Länge des Drahtes liegt, so daß in dem Draht nach Anregung durch elektromagnetische Strahlung (28) auf der ersten vorbestimmten Frequenz in Anwesenheit eines gleichstromerregten Vormagnetisierungsfeldes eine Ummagnetisierung durch Drehprozesse stattfindet und der Draht elektromagnetische Strahlung (32) auf einer zweiten kleineren vorbestimmten Frequenz transmittiert, die ein frequenzgeteilter Quotient der ersten vorbestimmten Frequenz ist.

2. Ein Transponder nach Anspruch 1, **dadurch gekennzeichnet,** daß Vorrichtungen (21) zum Einschluß des Drahtes (19) in einem Gegenstand (20) vorgesehen sind, so daß der Draht mechanische Schwingungen ausführen kann, wenn er von besagter elektromagnetischer Strahlung (28) auf der ersten vorbestimmten Frequenz angeregt wird.

3. Ein Transponder nach Anspruch 1, **dadurch gekennzeichnet,** daß der Draht (19) aus einer Legierung aus Eisen, Bor und Silizium besteht.

4. Ein Transponder nach Anspruch 1, **dadurch gekennzeichnet,** daß der Draht (19) aus einer Legierung aus Eisen, Bor, Silizium und Kohlenstoff besteht.

5. Ein Nachweisdetektiersystem, das einen Transponder (18) nach einem der Ansprüche 1 bis 4 zur Anbindung an oder zum Einschluß in einen Gegenstand (20), der innerhalb einer Überwachungszone (30) detektiert werden soll, Vorrichtungen (22) zur Transmission eines elektromagnetischen Strahlungssignals (28) auf der ersten vorbestimmten Frequenz in die Überwachungszone (30) und Vorrichtungen (24) zur Detektion elektromagnetischer Strahlung (32) auf der zweiten Frequenz innerhalb der Überwachungszone (30) aufweist.

6. Ein System nach Anspruch 5, **dadurch gekennzeichnet,** daß Vorrichtungen (26) zur Versorgung mit einem gleichstromerregten Vormagnetisierungsfeld innerhalb der Überwachungszone (30) vorgesehen sind, um den Draht (19) innerhalb besagter Überwachungszone besagtem Vormagnetisierungsfeld auszusetzen.

7. Ein Gegenstand (20) mit einem Transponder (18) nach einem der Ansprüche 1 bis 4, **dadurch gekennzeichnet,** daß der Gegenstand (20) nach Anregung durch elektromagnetische Strahlung der ersten vorbestimmten Frequenz (28) durch Aussenden der vorbestimmten frequenzgeteilten charakteristischen Strahlung (32) in seiner Authentizität erkannt werden kann.

8. Ein System zum Erkennen der Authentizität eines Gegenstandes nach Anspruch 7, **dadurch gekennzeichnet,** daß Vorrichtungen (22) zur Transmission eines elektromagnetischen Strahlungssignales (28) auf der ersten vorbestimmten Frequenz in die Überwachungszone (30) vorgesehen ist und Vorrichtungen (24) zur Detektion der elektromagnetischen Strahlungen (32) auf der zweiten Frequenz innerhalb der Überwachungszone (30) vorgesehen sind.

9. Eine Methode zur Behandlung eines amorphen ferromagnetischen Legierungsdrahtes um den Draht (19) mit seiner frequenzteilenden Charakteristik zur Herstellung eines Transponders (18) nach einem der Ansprüche 1 bis 4 herzustellen, **dadurch gekennzeichnet,** daß die Methode folgende Schritte aufweist:
(a) Auswählen (10) eines amorphen, ferromagnetischen Legierungsdrahtes, der geformt wurde durch Schmelzen und darauffolgendes Abschrecken der Legierung; und
(b) Ausglühen (12) (flash annealing) des ausgewählten Drahtes.

10. Eine Methode zur Herstellung eines amorphen ferromagnetischen Legierungsdrahtes (19), der eine frequenzteilende Charakteristik besitzt, um einen Transponder (18) nach einem der Ansprüche 1 bis 4 herzustellen, **dadurch gekennzeichnet,** daß die Methode die folgenden Schritte aufweist:
(a) Herstellen eines amorphen, ferromagnetischen Legierungsdrahtes durch Schmelzen und darauffolgendes Abschrecken der Legierung; und
(b) Ausglühen (12) (flash annealing) des hergestellten Drahtes.

## Revendications

1. Un émetteur-répondeur ou transpondeur (18) pour détecter un rayonnement électromagnétique (28) à une première fréquence prédéterminée et répondre à ladite détection en émettant un rayonnement électromagnétique (32) à une seconde fréquence plus basse qui est un quotient obtenu par division fréquentielle de la première fréquence prédéterminée, caractérisée par un fil (19) amorphe, magnétostrictif, ferromagnétique présentant une section droite circulaire et une anisotropie magnétique dans une direction préférentielle qui est transversale à la longueur du fil de sorte que lorsque le fil est soumis à l'excitation d'un rayonnement électromagnétique (28) à une première fréquence prédéterminée, tout en étant présent dans un champ de pré-aimantation à courant continu, l'inversion magnétique en mode rotatoire se réalise et le fil transmet un rayonnement électromagnétique (32) à une seconde fréquence moindre prédéterminée qui est un quotient obtenu par division fréquentielle de la première fréquence prédéterminée.

2. Un transpondeur selon la revendication 1, comportant de plus des moyens (21) pour insérer le fil (19) dans un article (20) de manière à permettre la vibration mécanique du fil lorsque ledit rayonnement électromagnétique (28) provoque son excitation à la première fréquence prédéterminée.

3. Un transpondeur selon la revendication 1, dans laquelle le fil (19) est un alliage de fer, de bore et de silicium.

4. Un transpondeur selon la revendication 1, dans laquelle le fil est un alliage de fer, de bore, de silicium, et de carbone.

5. Un système de détection de présence comportant un transpondeur (18) selon l'une quelconque des revendications 1 à 4, destiné à être rendu solidaire d'un article (20) ou à être inséré dans celui-ci pour détecter ce dernier dans une zone de surveillance (30) comportant également des moyens (22) pour assurer la transmission d'un signal sous forme d'un rayonnement électromagnétique (28) à la première fréquence prédéterminée dans la zone de surveillance (30); et des moyens (24) pour détecter le rayonnement électromagnétique (32) à la seconde fréquence à l'intérieur de la zone de surveillance (30).

6. Un système selon la revendication 5, comportant de plus des moyens (26) pour l'obtention d'un champ de préaimantation à courant continu à l'intérieur de la zone de surveillance (30) pour soumettre le fil (19) audit champ de pré-aimantation quand il se trouve à l'intérieur de ladite zone de surveillance.

7. Un article (20) présentant une certaine utilité, qui contient un transpondeur (19) selon l'une quelconque des revendications 1 à 4, article dont l'authenticité peut être vérifié du fait qu'il présente une caractéristique prédéterminée de division de fréquence quand il est soumis à la première fréquence prédéterminée d'excitation.

8. Un système pour vérifier l'authenticité d'un article présentant une certaine utilité selon la revendication 7, comportant des moyens (22) pour assurer la transmission d'un signal (28) sous forme de rayonnement électromagnétique à la première fréquence prédéterminée vers une zone de surveillance (30); et des moyens (24) pour détecter un rayonnement électromagnétique (32) à la seconde fréquence à l'intérieur de la zone de surveillance (30).

9. Un procédé de traitement d'un fil amorphe en alliage ferromagnétique pour conférer au fil (19) une caractéristique de division de fréquence pour que le transpondeur (18) selon l'une quelconque des revendications 1 à 4, soit ainsi matérialisé, caractérisé par le fait qu'il comporte les étapes consistant à:
(a) choisir (10) un fil amorphe en alliage ferromagnétique, formé par un moulage initial suivi d'une trempe de l'alliage; et
(b) soumettre à un recuit éclair (12) le fil choisi.

10. Un procédé de production d'un fil (19) amorphe en alliage ferromagnétique présentant une caractéristique de division de fréquence pour l'obtention d'un transpondeur (18) selon l'une quelconque des revendications 1 à 4, caractérisé en ce qu'il comprend les étapes consistant à:
(a) obtenir un fil en alliage amorphe ferromagnétique par un montage initial suivi d'une trempe de l'alliage; et
(b) soumettre à un recuit éclair (12) le fil obtenu.
